# EUROPEAN PATENT SPECIFICATION

(11) **EP 3 025 469 B1**
(45) Date of publication and mention of the grant of the patent: **24.02.2021**
(21) Application number: 13889769.9
(22) Date of filing: 25.07.2013
(51) Int. Cl.: G06F 3/14, H04W 4/02, H04W 4/20, G06F 3/0482, G06F 3/0484, G06F 1/16, G06F 3/0481, H04W 4/21, G09G 5/14

(54) **METHOD AND DEVICE FOR DISPLAYING OBJECTS**
VERFAHREN UND VORRICHTUNG ZUR ANZEIGE VON OBJEKTEN
PROCÉDÉ ET DISPOSITIF POUR AFFICHER DES OBJETS

(43) Date of publication of application: 01.06.2016
(73) Proprietor: InterDigital CE Patent Holdings, 75017 Paris (FR)
(72) Inventor: ZHOU, Wei, Beijing 100192 (CN); DU, Lin, Beijing 100192 (CN); XU, Yan, Beijing 100192 (CN)
(74) Representative: Interdigital
(86) International application number: PCT/CN2013/080099
(87) International publication number: WO 2015/010295

(56) References cited:
- WO-A1-03/053048
- CN-A- 101 646 056
- CN-A- 101 788 895
- CN-A- 102 147 679
- KR-A- 20130 000 532
- US-A1- 2006 146 765
- US-A1- 2011 209 103

## Description

### TECHNICAL FIELD

The present invention relates to user interaction, and more particularly relates to a method and a system for displaying objects.

### BACKGROUND

Multi-screen interactivity (e.g. second screen, triple play, and etc.) is a human computer interaction technology involving multiple displays and input devices, such as TV, personal computer, mobile and tablet, which gives users another way of issuing commands and consuming media content. Nowadays, users are no longer fixed to high computing desktops; they are surrounded by digital ecosystems and information networks. A challenge in the multi-device system is how to incorporate interaction techniques that are not only intuitive, but also allow users to easily and quickly interact with the many functions and features Documents WO 03/053048 A1, KR 2013 0000532 A, US 2011/209103 A1 and US 2006/146765 A1 relate to moving and displaying objects on display devices.

### SUMMARY

The present invention is defined by the independent claims 1 and 4. Preferred embodiments are set out in the dependent claims. According to an aspect of the present invention, it is provided a method for displaying a plurality of objects of a detachable user interface in a system comprising a first device and a second device as defined by claim 1.

According to another aspect of the present invention, it is provided a system comprising a first device and a second device for displaying a plurality of objects of a detachable user interface as defined by claim 4.

It is to be understood that more aspects and advantages of the invention will be found in the following detailed description of the present invention.

### BRIEF DESCRIPTION OF THE DRAWINGS

The accompanying drawings, which are included to provide a further understanding of the invention and are incorporated in and constitute a part of this application, will be used to illustrate an embodiment of the invention, as explained by the description. The invention is not limited to the embodiment.

In the drawings:
Fig. 1 is a block diagram showing a system for shifting displayed content between two devices according to an embodiment of present invention;
Figs. 2A to 2E are diagrams showing an example about shift of objects between the two tablets according to the embodiment of present invention; and
Fig. 3 is a flow chart showing a method for moving objects between the two tablets according to the embodiment of the present invention.

### DETAILED DESCRIPTION

The embodiment of the present invention will now be described in detail in conjunction with the drawings. In the following description, some detailed descriptions of known functions and configurations may be omitted for clarity and conciseness.

The present invention provides a method and a system for a multi-screen interaction so as to give users natural interaction experience. One or more displayed objects on the two screens are shifted between them when the two screens are moved close to each other, or far away from each other.

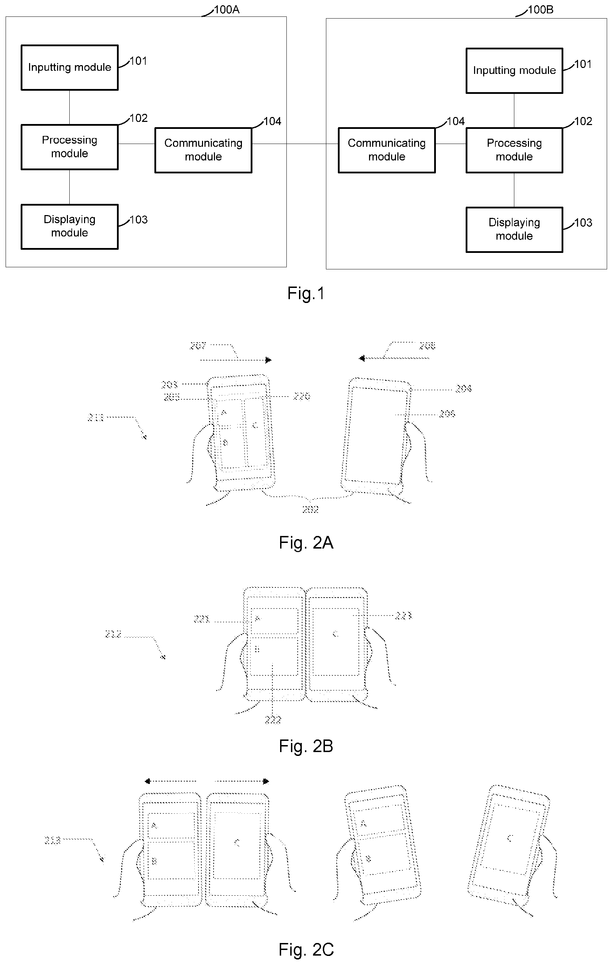

Fig. 1 is a block diagram showing a system for shifting displayed content between two devices according to an embodiment of present invention. In the embodiment, the system comprises two identical devices 100A and 100B. Each device has an inputting module 101, a processing module 102, a displaying module 103, a communicating module 104 and a storage (not shown) for storing data. Their functions and hardware implementations are described as followed.

The inputting module 101 is used to receive user inputs, which include not only the single touch, multi-touch on the touch screen and button press, but also the motion inputs on the device. For example, the motion inputs include translation movement of one device towards or far away from the other device and rotatory movement of the device. Accordingly, hardware corresponding to the inputting module 101 includes touch screen, a physical button and one or more sensors (e.g. gyro sensor, G sensor, magnetic field sensor, acceleration sensor, distance sensor, proximity sensor etc.). In the example shown below, one sensor is used, i.e. a magnetic field sensor to detect the distance and movement direction between the two devices because magnetic field sensor is capable of providing a measure of magnetic field strength along x, y and z directions. However, it shall note that other sensors are also possible to use for detecting distance and movement direction.

The processing module 102 is used to process data according to algorithms and provide data to the displaying module 103 for display and to the communicating module 104 for transmission to the other device. The details will be described below in connection with the method. Hardware corresponding to the processing module 102 includes central processing unit (CPU), and in some cases, it may include graphic processing unit (GPU) for processing image data for display.

The displaying module 103 is used to display contents. Hardware corresponding to the displaying module 103 includes a touch screen. In one embodiment, the contents are computer objects including window, box, image, document, icon etc.

The communicating module 104 is used to transmit and receive data. Hardware corresponding to the communicating module 104 includes network interface or network adapter. It can be wired network adapter, e.g. cable or wireless network adapter, e.g. Bluetooth, ZigBee, WiFi or WiMAX.

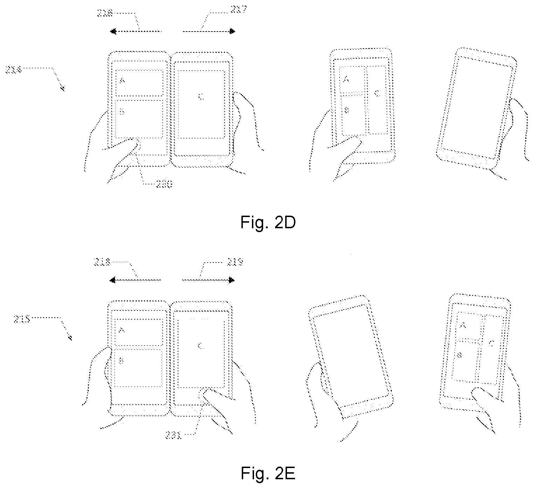

Figs. 2A to 2E show an example about shift of objects between the two tablets 203 and 204. In the example, there are 3 objects, i.e. object A, object B and object C. In this example, the objects A, B and C are images. It shall note that types of objects A, B and C can be different, e.g. object A is an image, object B is a window or box holding a text comment about the image and object C is an icon linking to an external document. Specifically, Figs. 2A to 2C show move of the object C from a first device 203 to a second device 204; Fig. 2D shows move of the object C from the second device 204 to the first device 203 with contact between finger and the first device maintained; and Fig. 2E shows move of the objects A and B from the first device 203 to the second device 204 with contact between finger and the second device maintained.

In the view 211 of Fig. 2A, all contents (objects A, B and C) of a detachable user interface 220 are displayed on the first screen 203, and nothing of the detachable user interface 220 is displayed on the second screen 204. And the first device and second device are moved close to each other. Reference numerals 207 and 208 show direction of translation movement. Herein, "detachable" means that any one of detachable objects shown in the user interface is able to be moved to another device and be separated from other objects.

In the view 212 of Fig. 2B, when the two devices are moved to contact each other or the distance between them is below a predefined threshold value, the object C 223 of the UI 220 is moved to the screen of the second device. The objects A and B 221 222 remain on the screen of the first device and the width of the objects is scaled to width of the screen so as to eliminate the blank area caused by the move of the object C.

In the view 213 of the Fig. 2C, the two devices are moved away from each other, and the objects A and B 221,222 remain on the first device, and the object C 223 remain on the second device. So the contents of the user interface 220 are separated from one screen to two screens.

In the view 214 of the Fig. 2D, the two devices are moved away from each other with a touch on the screen of the first device maintained, and the object C is moved to the first device, and the width of all objects are scaled based on the screen width, i.e. the width of an area including all objects equals to the screen width of the first device.

In the view 215 of the Fig. 2E, the two devices are moved away from each other with a touch on the screen of the second device maintained, and the objects A and B are moved to the second device, and the width of all objects are scaled based on the screen width, i.e. the width of an area including all objects equals to the screen width of the second device.

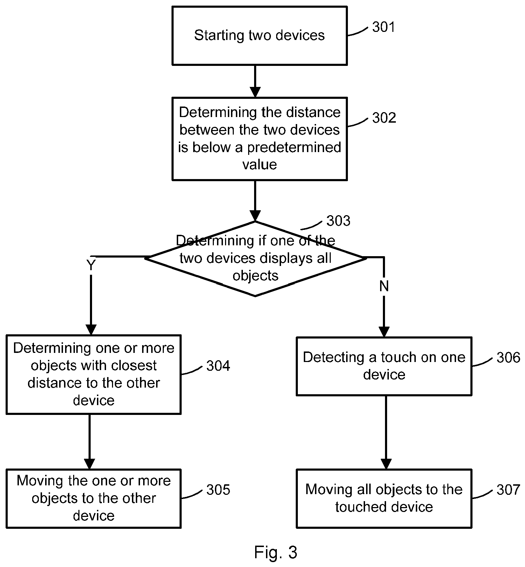

Fig. 3 is a flow chart showing a method for moving objects between the two tablets according to the embodiment of the present invention.

In the step 301, the two devices are started. After the starting up, the two devices are automatically connected to each other via their communicating modules.

In the step 302, because both devices have magnetic field sensors, each of them can be aware of the change in distance between them. If it is determined (the two devices both can make the determination, or only one device makes the determination and uses messages to inform the determination result to the other device) the distance is below a predetermined threshold value, then it goes to the step 303. Actually, because this example uses the magnetic field sensor, the determination step can be simplified to a determination on whether or not the magnetic field strength outputted by the magnetic field sensor is above a predefined magnetic field strength value.

In the step 303, it is determined if one of the two devices displays all objects, which means one device displays one or more objects and the other device displays no object. The determination can be implemented in two ways: a) the two devices send the information about their displayed objects to each other, and make a determination themselves based on the information about their displayed objects and received information about displayed objects on the other device; and b) one device is marked as host device and the other device is marked as client device, the client device sends information about its displayed objects to the host device, the host device makes a determination based on information about the displayed objects on the host device and received information about the displayed objects on the client device. If yes, it goes to the step 304; or otherwise, it goes to the step 306.

In the step 304, one or more objects with closest distance to the device that displays no object are determined. The determination step is implemented by a) determining which side (upside, down side, left side and right side) of the device displaying all objects is closest side to the other device by using the magnetic field strength, b) obtaining position information of the displayed objects on the device that displays all objects and c) determining the one or more objects based on the magnetic field strength and the position information of the displayed objects. In an example as illustrated in Fig. 2A, a) when the second device 204 is contacted or moved closer to the upside of the first device 203, the objects A and C are determined as they have the closest distance to the second device 204, b) when the second device 204 is contacted or moved closer to the down side of the first device 203, the objects B and C are determined as they have the closest distance to the second device 204, c) when the second device 204 is contacted or moved closer to the left side of the first device 203, the object A and B are determined as they have the closest distance to the second device 204 and d) when the second device 204 is contacted or moved closer to the right side of the first device 203, the object C is determined as it has the closest distance to the second device 204.

In the step 305, the determined one or more objects are moved to the device that displays no object, and sizes of the one or more objects are scaled to screen size of the device that displays no object. After the move out of the one or more objects, sizes of remaining objects are scaled to screen size of the device previously displaying all objects. The one or more objects will remain on the device that previously displays no object when the two devices are moved away from each other.

In the step 306, one of two devices detects a touch on it.

In the step 307, the objects on the device that is not touched are moved to the device that is touched, and consequently, all objects are displayed on the device that is touched, and size of an area holding all objects is scaled to the screen size. Herein, there are many methods for arranging all objects in the area. A first method is that absolute positions or relative positions of all objects are predefined in a database. A second method is that the objects from the untouched device are moved and placed in blank area or unused area in the screen of the touched device. A third method is that the touched device firstly combine area holding objects in the touched device and area holding objects in the untouched device to form a new area and then scale down the size of the new area to the screen size. In order to make all objects remain on the touched device after releasing touch (or called contact between user finger or other touching object and the screen), the touch shall not be released until the distance between the two devices become larger than the predetermined threshold value by moving the two devices away from each other with contact maintained.

Herein, if the touch on the device is released when the distance between the two devices is still below the predetermined threshold value, there are two methods to handle it. A first method is that it goes to the step 304 (now shown in the Fig. 3). It means one or more objects among all objects displayed in the touched device will be moved to the untouched device. A second method is that objects previously displayed on the untouched device are moved back to the untouched device. In order to enable the second method, each device has a database storing information about which objects are displayed on the device before it is touched in the step 306.

According to a variant of the present embodiment, the device further has an acceleration sensor for detecting if a device is moved; therefore, the magnetic field sensor is only enabled when the acceleration sensor detects a move.

In the present embodiment, one or more objects are determined based on distance from objects displayed in one device to the other device. In an example, the user can select one or more objects to move to the other device after the step 302.

In the present embodiment, the two devices are both tablets and have same hardware components. According to an example, the two devices don't have same hardware components. For example, one device is a STB with a TV or a display connected and the other device is a tablet. The STB and the tablet are interconnected, the magnetic field sensor is placed on the TV, and the touch can only be applied on the tablet. When the distance between the tablet and the TV becomes below the predetermined threshold value by moving tablet close to the TV, the steps 303, 304, 305, 306 and 307 would be performed.

According to an example, a copy of the one or more objects is sent from one device to the other device instead of moving them to the other device.

According to an example, all objects displayed on one device have a sequence number and are moved to the other device in an ordinal and one-by-one manner, which means the steps 303, 304, 305, 306 and 307 are not performed in this example, and each time the distance between the two device becomes below the predetermined threshold value, one object with largest or smallest sequence number is moved to the other device.

According to an example, only steps 301, 302, 304 and 305 are used. When the distance between a first device that displaying objects and a second device that may display no objects or some objects becomes below the predetermined threshold value in the step 302, it is determined one or more objects in the first device in the step 304 and move the determined one or more objects to the second device in the step 305. Herein, the determined one or more objects can be added to or replace its currently displayed objects (either no object or some objects).

A number of implementations and examples have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application and are within the scope of the invention as defined by the appended claims.

## Claims

1. A method for displaying a plurality of objects of a detachable user interface in a system comprising a first device (100A) and a second device (100B);
- wherein each of the first device and the second device comprises an inputting module comprising a sensor, a processing module, a screen, a communication module for communicating between the first device and the second device, and a storage module;
the method further comprising:
- establishing (301) a communication between the first device and the second device for exchanging information about which objects are displayed on the first device and the second device;
- determining (302), by any of the first and the second device, that a distance between the first device and the second device is below a threshold value,
- in case the distance between the first device and the second device becomes below the threshold value, determining (303) that the plurality of objects of the detachable user interface are displayed on the screen of the second device and none of the plurality of objects of the detachable user interface is displayed on the screen of first device, wherein any one of the objects of the detachable user interface is able to be displayed on the screen of the first device and to be separated from remaining objects displayed on the screen of the second device;
- in case the plurality of objects of the detachable user interface are displayed on the screen of the second device, determining (304), by the inputting module of any of the first and second device, at least one object having closest distance to the first device compared to remaining objects among the plurality of objects of the detachable user interface that were previously displayed on the screen of the second device;
- displaying (305) on the screen of the first device the determined at least one object by scaling the size of the determined at least one object to the screen size of the first device, and displaying (305) on the screen of the second device the remaining objects by scaling sizes of the remaining objects to the screen size of the second device, the determined at least one object displayed on the screen of the first device not being displayed on the screen of the second device;
- in case the first device is moved away from the second device, keeping displaying the determined at least one object on the screen of the first device, and keeping displaying the remaining objects on the screen of the second device.

2. The method according to claim 1, wherein in any of the first and the second device, the screen is a touch screen, in case the plurality of objects of the detachable user interface are not displayed on the screen of the second device, and in case the distance between the first device and the second device is below the threshold value, the method further comprises:
- upon detecting (306), by any of the first and the second device, a contact between a touching object and the touch screen of the device, said device being the touched device, the other device being the untouched device, displaying (307) the plurality of the objects of the detachable user interface on the touched device; and
- upon detecting, by the touched device, a release of the contact between the touching object and the touch screen of the touched device,
o either iterating the steps of determining (304) at least one object having closest distance with the untouched device, displaying (305) on the screen of the untouched device the determined at least one object, and displaying (305) on the screen of the touched device the remaining objects according to claim 1,
o or displaying the remaining objects of the detachable user interface on the touch screen of the second device and the determined at least one object on the touch screen of the first device, wherein information about which objects are displayed on a device before detecting the contact is stored in the storage module of the first device and the second device.

3. The method according to claim 2, wherein in case the distance between the first device and the second device is no longer below the threshold value, the method further comprises:
- upon detecting, by the touched device, a release of the contact between the touching object and the touch screen of the touched device, maintaining the display of the plurality of objects on the touch screen of the touched device.

4. A system comprising a first device (100A) and a second device (100B) for displaying a plurality of objects of a detachable user interface, each of the first and the second devices comprising:
- an inputting module (101) for determining a distance between the first device and the second device, the inputting module comprising a sensor;
- a communication module (104) for communicating between the first device and the second device;
- a storage module;
- a displaying module (103) for displaying objects, the displaying module including a screen; and
- a processing module (102);
wherein:
- the communication module (104) is configured to establish a communication between the first device and the second device for exchanging information about which objects are displayed on the first device and the second device;
- the processing module (102) of any of the first and the second device is configured to determine whether the distance between the first device and the second device is below a threshold value;
- in case the distance between the first device and the second device becomes below the threshold value, the processing module (102) of any of the first and the second device is further configured to determine that the plurality of objects of the detachable user interface are displayed on the screen of the second device and none of the plurality of objects of the detachable user interface is displayed on the screen of the first device, wherein any one of the objects of the detachable user interface is able to be displayed on the screen of the first device and to be separated from remaining objects displayed on the screen of the second device;
- in case the plurality of objects of the detachable user interface are displayed on the screen of the second device, the inputting module (101) is configured to determine at least one object having closest distance to the first device compared to remaining objects among the plurality of objects of the detachable user interface that were previously displayed on the screen of the second device;
- the processing module of the first device is configured to display the determined at least one object among the plurality of objects of the detachable user interface by scaling the size of the determined at least one object to the screen size of the first device, the processing module of the second device being configured to display the remaining objects by scaling sizes of the remaining objects to the screen size of the second device, the determined at least one object displayed on the screen of the first device not being displayed on the screen second device;
- in case the first device is moved away from the second device, the processing module of the first device is further configured to keep displaying the determined at least one object on the screen of the first device and the processing module of the second device is further configured to keep displaying the remaining objects on the screen of the second device.

5. The system according to claim 4, wherein in any of the first and the second device:
the screen of said displaying module is a touch screen,
the inputting module is further configured to detect contact and release of contact between a touching object and the touch screen of the device;
the storage module is further configured to store information about which objects are displayed on the device; and
wherein in case the plurality of objects of the detachable user interface are not displayed on the screen of the second device, and in case the distance between the first device and the second device is below the threshold value,
- upon detecting a contact between a touching object and the touch screen of the device, said device being touched device, the other device being the untouched device, the processing module of the touched device is further configured to display the plurality of the objects of the detachable user interface on the touch screen of the touched device; and
- upon detecting, by the touched device, a release of the contact between the touching object and the touch screen of the touched device, the processing module is configured to:
∘ either determine at least one object having closest distance with the untouched device, display on the screen of the untouched device the determined at least one object, and display on the screen of the touched device the remaining objects according to claim 4
∘ or to display the remaining objects of the detachable user interface on the second screen of the untouched device and the determined at least one object on the touch screen of the first device.

6. The device according to claim 5, wherein in case the distance between the first device and the second device is no longer below the threshold value, the processing module of the touched device is further configured upon detecting a release of the contact between the touching object and the touch screen of the touched device, to maintain the display of the plurality of objects on the touch screen of the touched device.

## Patentansprüche

1. Verfahren zum Anzeigen mehrerer Objekte einer abnehmbaren Benutzerschnittstelle in einem System, das eine erste Vorrichtung (100A) und eine zweite Vorrichtung (100B) umfasst;
- wobei sowohl die erste Vorrichtung als auch die zweite Vorrichtung ein Eingabemodul, das einen Sensor umfasst, ein Verarbeitungsmodul, einen Bildschirm, ein Kommunikationsmodul zum Kommunizieren zwischen der ersten Vorrichtung und der zweiten Vorrichtung und ein Speichermodul umfasst;
wobei das Verfahren ferner umfasst:
- Aufbauen (301) einer Kommunikation zwischen der ersten Vorrichtung und der zweiten Vorrichtung zum Austauschen von Informationen darüber, welche Objekte auf der ersten Vorrichtung und auf der zweiten Vorrichtung angezeigt werden,
- Bestimmen (302), dass eine Entfernung zwischen der ersten Vorrichtung und der zweiten Vorrichtung unter einem Schwellenwert liegt, durch irgendeine der ersten und der zweiten Vorrichtung,
- Bestimmen (303), dass die mehreren Objekte der abnehmbaren Benutzerschnittstelle auf dem Bildschirm der zweiten Vorrichtung angezeigt werden und dass keines der mehreren Objekte der abnehmbaren Benutzerschnittstelle auf dem Bildschirm der ersten Vorrichtung angezeigt wird, falls die Entfernung zwischen der ersten Vorrichtung und der zweiten Vorrichtung unter den Schwellenwert fällt, wobei irgendeines der Objekte der abnehmbaren Benutzerschnittstelle auf dem Bildschirm der ersten Vorrichtung angezeigt werden kann und von verbleibenden Objekten, die auf dem Bildschirm der zweiten Vorrichtung angezeigt werden, getrennt werden kann;
- Bestimmen (304) mindestens eines Objekts mit der kleinsten Entfernung zu der ersten Vorrichtung im Vergleich zu verbleibenden Objekten unter den mehreren Objekten der abnehmbaren Benutzerschnittstelle, die auf dem Bildschirm der zweiten Vorrichtung zuvor angezeigt wurden, durch das Eingabemodul irgendeiner der ersten und der zweiten Vorrichtung, falls die mehreren Objekte der abnehmbaren Benutzerschnittstelle auf dem Bildschirm der zweiten Vorrichtung angezeigt werden;
- Anzeigen (305) des bestimmten mindestens einen Objekts durch Skalieren der Größe des bestimmten mindestens einen Objekts auf die Bildschirmgröße der ersten Vorrichtung auf dem Bildschirm der ersten Vorrichtung und Anzeigen (305) der verbleibenden Objekte durch Skalieren der Größen der verbleibenden Objekte auf die Bildschirmgröße der zweiten Vorrichtung auf dem Bildschirm der zweiten Vorrichtung, wobei das bestimmte mindestens eine Objekt, das auf dem Bildschirm der ersten Vorrichtung angezeigt wird, auf dem Bildschirm der zweiten Vorrichtung nicht angezeigt wird;
- weiteres Anzeigen des bestimmten mindestens einen Objekts auf dem Bildschirm der ersten Vorrichtung und weiteres Anzeigen der verbleibenden Objekte auf dem Bildschirm der zweiten Vorrichtung, falls die erste Vorrichtung von der zweiten Vorrichtung wegbewegt wird.

2. Verfahren nach Anspruch 1, wobei der Bildschirm in irgendeiner der ersten und der zweiten Vorrichtung ein Berührungsbildschirm ist, wobei das Verfahren ferner umfasst, falls die mehreren Objekte der abnehmbaren Benutzerschnittstelle auf dem Bildschirm der zweiten Vorrichtung nicht angezeigt werden und falls die Entfernung zwischen der ersten Vorrichtung und der zweiten Vorrichtung unter dem Schwellenwert liegt:
- Anzeigen (307) der mehreren Objekte der abnehmbaren Benutzerschnittstelle auf der berührten Vorrichtung nach Detektieren (306) eines Kontakts zwischen einem berührenden Objekt und dem Berührungsbildschirm der Vorrichtung durch irgendeine der ersten und der zweiten Vorrichtung, wobei die Vorrichtung die berührte Vorrichtung ist, wobei die andere Vorrichtung die nicht berührte Vorrichtung ist; und
- nach Detektieren eines Lösens des Kontakts zwischen dem berührenden Objekt und dem Berührungsbildschirm der berührten Vorrichtung durch die berührte Vorrichtung,
o entweder Iterieren der Schritte des Bestimmens (304) mindestens eines Objektes mit der kleinsten Entfernung zu der nicht berührten Vorrichtung, des Anzeigens (305) des bestimmten mindestens einen Objekts auf dem Bildschirm der nicht berührten Vorrichtung und des Anzeigens (305) der verbleibenden Objekte auf dem Bildschirm der berührten Vorrichtung nach Anspruch 1,
o oder Anzeigen der verbleibenden Objekte der abnehmbaren Benutzerschnittstelle auf dem Berührungsbildschirm der zweiten Vorrichtung und des bestimmten mindestens einen Objekts auf dem Berührungsbildschirm der ersten Vorrichtung, wobei Informationen darüber, welche Objekte auf einer Vorrichtung angezeigt werden, bevor der Kontakt detektiert wird, in dem Speichermodul der ersten Vorrichtung und der zweiten Vorrichtung gespeichert werden.

3. Verfahren nach Anspruch 2, wobei das Verfahren ferner umfasst, falls die Entfernung zwischen der ersten Vorrichtung und der zweiten Vorrichtung nicht mehr unter dem Schwellenwert liegt:
- weitere Anzeige der mehreren Objekte auf dem Berührungsbildschirm der berührten Vorrichtung nach Detektieren eines Lösens des Kontakts zwischen dem berührenden Objekt und dem Berührungsbildschirm der berührten Vorrichtung durch die berührte Vorrichtung.

4. System, das eine erste Vorrichtung (100A) und eine zweite Vorrichtung (100B) zum Anzeigen mehrerer Objekte einer abnehmbaren Benutzerschnittstelle umfasst, wobei sowohl die erste als auch die zweite Vorrichtung umfasst:
- ein Eingabemodul (101) zum Bestimmen einer Entfernung zwischen der ersten Vorrichtung und der zweiten Vorrichtung, wobei das Eingabemodul einen Sensor umfasst;
- ein Kommunikationsmodul (104) zum Kommunizieren zwischen der ersten Vorrichtung und der zweiten Vorrichtung;
- ein Speichermodul;
- ein Anzeigemodul (103) zum Anzeigen von Objekten, wobei das Anzeigemodul einen Bildschirm enthält; und
- ein Verarbeitungsmodul (102);
wobei:
- das Kommunikationsmodul (104) dafür konfiguriert ist, zwischen der ersten Vorrichtung und der zweiten Vorrichtung eine Kommunikation aufzubauen, um Informationen darüber auszutauschen, welche Objekte auf der ersten Vorrichtung und auf der zweiten Vorrichtung angezeigt werden;
- das Verarbeitungsmodul (102) irgendeiner der ersten und der zweiten Vorrichtung dafür konfiguriert ist zu bestimmen, ob die Entfernung zwischen der ersten Vorrichtung und der zweiten Vorrichtung unter einem Schwellenwert liegt;
- das Verarbeitungsmodul (102) irgendeiner der ersten und der zweiten Vorrichtung ferner dafür konfiguriert ist zu bestimmen, dass die mehreren Objekte der abnehmbaren Benutzerschnittstelle auf dem Bildschirm der zweiten Vorrichtung angezeigt werden und dass keines der mehreren Objekte der abnehmbaren Benutzerschnittstelle auf dem Bildschirm der ersten Vorrichtung angezeigt wird, falls die Entfernung zwischen der ersten Vorrichtung und der zweiten Vorrichtung kleiner als der Schwellenwert wird, wobei irgendeines der Objekte der abnehmbaren Benutzerschnittstelle auf dem Bildschirm der ersten Vorrichtung angezeigt werden kann und von den verbleibenden Objekten, die auf dem Bildschirm der zweiten Vorrichtung angezeigt werden, getrennt werden kann;
- das Eingabemodul (101) dafür konfiguriert ist, mindestens ein Objekt mit der kleinsten Entfernung zu der ersten Vorrichtung im Vergleich zu verbleibenden Objekten unter den mehreren Objekten der abnehmbaren Benutzerschnittstelle, die zuvor auf dem Bildschirm der zweiten Vorrichtung angezeigt wurden, zu bestimmen, falls die mehreren Objekte der abnehmbaren Benutzerschnittstelle auf dem Bildschirm der zweiten Vorrichtung angezeigt werden;
- das Verarbeitungsmodul der ersten Vorrichtung dafür konfiguriert ist, das bestimmte mindestens eine Objekt unter den mehreren Objekten der abnehmbaren Benutzerschnittstelle durch Skalieren der Größe des bestimmten mindestens einen Objekts auf die Bildschirmgröße der ersten Vorrichtung anzuzeigen, wobei das Verarbeitungsmodul der zweiten Vorrichtung dafür konfiguriert ist, die verbleibenden Objekte durch Skalieren der Größen der verbleibenden Objekte auf die Bildschirmgröße der zweiten Vorrichtung anzuzeigen, wobei das bestimmte mindestens eine Objekt, das auf dem Bildschirm der ersten Vorrichtung angezeigt wird, auf dem Bildschirm der zweiten Vorrichtung nicht angezeigt wird;
- das Verarbeitungsmodul der ersten Vorrichtung ferner dafür konfiguriert ist, das bestimmte mindestens eine Objekt auf dem Bildschirm der ersten Vorrichtung weiter anzuzeigen, und das Verarbeitungsmodul der zweiten Vorrichtung ferner dafür konfiguriert ist, die verbleibenden Objekte auf dem Bildschirm der zweiten Vorrichtung weiter anzuzeigen, falls die erste Vorrichtung von der zweiten Vorrichtung wegbewegt wird.

5. System nach Anspruch 4, wobei in irgendeiner der ersten und der zweiten Vorrichtung:
der Bildschirm des Anzeigemoduls ein Berührungsbildschirm ist,
das Eingabemodul ferner dafür konfiguriert ist, einen Kontakt und ein Lösen des Kontakts zwischen einem berührenden Objekt und dem Berührungsbildschirm der Vorrichtung zu detektieren;
das Speichermodul ferner dafür konfiguriert ist, Informationen darüber zu speichern, welche Objekte auf der Vorrichtung angezeigt werden; und
wobei, falls die mehreren Objekte der abnehmbaren Benutzerschnittstelle nicht auf dem Bildschirm der zweiten Vorrichtung angezeigt werden und falls die Entfernung zwischen der ersten Vorrichtung und der zweiten Vorrichtung unter dem Schwellenwert liegt,
- das Verarbeitungsmodul der berührten Vorrichtung ferner dafür konfiguriert ist, nach Detektieren eines Kontakts zwischen einem berührenden Objekt und dem Berührungsbildschirm der Vorrichtung die mehreren Objekte der abnehmbaren Benutzerschnittstelle auf dem Berührungsbildschirm der berührten Vorrichtung anzuzeigen, wobei die Vorrichtung die berührte Vorrichtung ist, während die andere Vorrichtung die nicht berührte Vorrichtung ist; und
- das Verarbeitungsmodul dafür konfiguriert ist, nach Detektieren eines Lösens des Kontakts zwischen dem berührenden Objekt und dem Berührungsbildschirm der berührten Vorrichtung durch die berührte Vorrichtung:
∘ nach Anspruch 4 entweder mindestens ein Objekt mit der kleinsten Entfernung zu der nicht berührten Vorrichtung zu bestimmen, das bestimmte mindestens eine Objekt auf dem Bildschirm der nicht berührten Vorrichtung anzuzeigen und die verbleibenden Objekte auf dem Bildschirm der berührten Vorrichtung anzuzeigen,
∘ oder die verbleibenden Objekte der abnehmbaren Benutzerschnittstelle auf dem zweiten Bildschirm der nicht berührten Vorrichtung und das bestimmte mindestens eine Objekt auf dem Berührungsbildschirm der ersten Vorrichtung anzuzeigen.

6. Vorrichtung nach Anspruch 5, wobei das Verarbeitungsmodul der berührten Vorrichtung ferner dafür konfiguriert ist, die mehreren Objekte nach Detektieren eines Lösens des Kontakts zwischen dem berührenden Objekt und dem Berührungsbildschirm der berührten Vorrichtung weiter auf dem Berührungsbildschirm der berührten Vorrichtung anzuzeigen, falls die Entfernung zwischen der ersten Vorrichtung und der zweiten Vorrichtung nicht mehr unter dem Schwellenwert liegt.

## Revendications

1. Procédé pour afficher une pluralité d'objets d'une interface utilisateur amovible dans un système comprenant un premier dispositif (100A) et un deuxième dispositif (100B) ;
- dans lequel chacun du premier dispositif et du deuxième dispositif comprend un module d'entrée comprenant un capteur, un module de traitement, un écran, un module de communication pour la communication entre le premier dispositif et le deuxième dispositif, et un module de stockage ;
le procédé comprenant en outre les étapes suivantes :
- établir (301) une communication entre le premier dispositif et le deuxième dispositif pour l'échange d'informations sur les objets qui sont affichés sur le premier dispositif et le deuxième dispositif ;
- déterminer (302), au niveau de l'un quelconque du premier et du deuxième dispositifs, qu'une distance entre le premier dispositif et le deuxième dispositif est inférieure à une valeur seuil,
- dans le cas où la distance entre le premier dispositif et le deuxième dispositif devient inférieure à la valeur seuil, déterminer (303) que la pluralité d'objets de l'interface utilisateur amovible est affichée sur l'écran du deuxième dispositif et qu'aucun objet de la pluralité d'objets de l'interface utilisateur amovible n'est affiché sur l'écran du premier dispositif, dans lequel l'un quelconque des objets de l'interface utilisateur amovible peut être affiché sur l'écran du premier dispositif et être séparé des autres objets affichés sur l'écran du deuxième dispositif ;
- dans le cas où la pluralité d'objets de l'interface utilisateur amovible est affichée sur l'écran du deuxième dispositif, identifier (304), au niveau du module d'entrée de l'un quelconque des premier et deuxième dispositif, au moins un objet le plus proche du premier dispositif par rapport aux autres objets de la pluralité d'objets de l'interface utilisateur amovible qui étaient précédemment affichés sur l'écran du deuxième dispositif ;
- afficher (305) sur l'écran du premier dispositif l'au moins un objet identifié en adaptant la taille de l'au moins un objet identifié à la taille d'écran du premier dispositif, et afficher (305) sur l'écran du deuxième dispositif les autres objets en adaptant la taille des objets restants à la taille d'écran du deuxième dispositif, l'au moins un objet identifié affiché sur l'écran du premier dispositif n'étant pas affiché sur l'écran du deuxième dispositif ;
- dans le cas où le premier dispositif est éloigné du deuxième dispositif, continuer à afficher l'au moins un objet identifié sur l'écran du premier dispositif et continuer à afficher les autres objets sur l'écran du deuxième dispositif.

2. Procédé selon la revendication 1, dans lequel, dans l'un quelconque du premier et du deuxième dispositifs, l'écran est un écran tactile, dans le cas où la pluralité d'objets de l'interface utilisateur amovible n'est pas affichée sur l'écran du deuxième dispositif, et dans le cas où la distance entre le premier dispositif et le deuxième dispositif est inférieure à la valeur seuil, le procédé comprend en outre :
- lors de la détection (306), par l'un quelconque du premier et du deuxième dispositifs, d'un contact entre un objet de pointage et l'écran tactile du dispositif, ledit dispositif étant le dispositif touché, l'autre dispositif étant le dispositif non touché, l'affichage (307) de la pluralité des objets de l'interface utilisateur amovible sur le dispositif touché ; et
- lors de la détection, par le dispositif touché, de l'arrêt du contact entre l'objet de pointage et l'écran tactile du dispositif touché,
o la répétition des étapes consistant à identifier (304) au moins un objet le plus proche du dispositif non touché, afficher (305) sur l'écran du dispositif non touché l'au moins un objet identifié et afficher (305) sur l'écran du dispositif touché les autres objets selon la revendication 1,
o ou l'affichage des autres objets de l'interface utilisateur amovible sur l'écran tactile du deuxième dispositif et l'au moins un objet identifié sur l'écran tactile du premier dispositif, où les informations concernant les objets qui sont affichés sur un dispositif avant la détection du contact sont stockées dans le module de stockage du premier dispositif et du deuxième dispositifs.

3. Procédé selon la revendication 2, dans lequel, dans le cas où la distance entre le premier dispositif et le deuxième dispositif n'est plus inférieure à la valeur seuil, le procédé comprend en outre :
- lors de la détection, par le dispositif touché, de l'arrêt du contact entre l'objet de pointage et l'écran tactile du dispositif touché, le maintien de l'affichage de la pluralité d'objets sur l'écran tactile du dispositif touché.

4. Système comprenant un premier dispositif (100A) et un deuxième dispositif (100B) pour afficher une pluralité d'objets d'une interface utilisateur amovible, chacun du premier et du deuxième dispositifs comprenant :
- un module d'entrée (101) pour déterminer une distance entre le premier dispositif et le deuxième dispositif, le module d'entrée comprenant un capteur ;
- un module de communication (104) pour la communication entre le premier dispositif et le deuxième dispositif ;
- un module de stockage ;
- un module d'affichage (103) pour l'affichage d'objets, le module d'affichage comprenant un écran ; et
- un module de traitement (102) ;
dans lequel :
- le module de communication (104) est configuré pour établir une communication entre le premier dispositif et le deuxième dispositif pour l'échange d'informations sur les objets qui sont affichés sur le premier dispositif et le deuxième dispositif ;
- le module de traitement (102) de l'un quelconque du premier et du deuxième dispositifs est configuré pour déterminer si la distance entre le premier dispositif et le deuxième dispositif est inférieure à une valeur seuil ;
- dans le cas où la distance entre le premier dispositif et le deuxième dispositif devient inférieure à la valeur seuil, le module de traitement (102) de l'un quelconque du premier et du deuxième dispositifs est en outre configuré pour déterminer que la pluralité d'objets de l'interface utilisateur amovible est affichée sur l'écran du deuxième dispositif et qu'aucun objet de la pluralité d'objets de l'interface utilisateur amovible n'est affiché sur l'écran du premier dispositif, où l'un quelconque des objets de l'interface utilisateur amovible peut être affiché sur l'écran du premier dispositif et être séparé des autres objets affichés sur l'écran du deuxième dispositif ;
- dans le cas où la pluralité d'objets de l'interface utilisateur amovible est affichée sur l'écran du deuxième dispositif, le module d'entrée (101) est configuré pour identifier au moins un objet le plus proche du premier dispositif par rapport aux autres objets de la pluralité d'objets de l'interface utilisateur amovible qui étaient précédemment affichés sur l'écran du deuxième dispositif ;
- le module de traitement du premier dispositif est configuré pour afficher l'au moins un objet identifié parmi la pluralité d'objets de l'interface utilisateur amovible en adaptant la taille de l'au moins un objet identifié à la taille d'écran du premier dispositif, le module de traitement du deuxième dispositif étant configuré pour afficher les autres objets en adaptant la taille des autres objets à la taille d'écran du deuxième dispositif, l'au moins un objet identifié affiché sur l'écran du premier dispositif n'étant pas affiché sur l'écran du deuxième dispositif ;
- dans le cas où le premier dispositif est éloigné du deuxième dispositif, le module de traitement du premier dispositif est en outre configuré pour continuer à afficher l'au moins un objet identifié sur l'écran du premier dispositif et le module de traitement du deuxième dispositif est en outre configuré pour continuer à afficher les autres objets sur l'écran du deuxième dispositif.

5. Système selon la revendication 4, dans lequel, dans l'un quelconque du premier et du deuxième dispositifs :
l'écran dudit module d'affichage est un écran tactile,
le module d'entrée est en outre configuré pour détecter le contact et l'arrêt du contact entre un objet de pointage et l'écran tactile du dispositif ;
le module de stockage est en outre configuré pour stocker des informations sur les objets qui sont affichés sur le dispositif ; et
dans le cas où la pluralité d'objets de l'interface utilisateur amovible n'est pas affichée sur l'écran du deuxième dispositif, et dans le cas où la distance entre le premier dispositif et le deuxième dispositif est inférieure à la valeur seuil,
- lors de la détection d'un contact entre un objet de pointage et l'écran tactile du dispositif, ledit dispositif étant le dispositif touché, l'autre dispositif étant le dispositif non touché, le module de traitement du dispositif touché est en outre configuré pour afficher la pluralité des objets de l'interface utilisateur amovible sur l'écran tactile du dispositif touché ; et
- - lors de la détection, par le dispositif touché, de l'arrêt du contact entre l'objet de pointage et l'écran tactile du dispositif touché, le module de traitement est configuré pour :
∘ identifier au moins un objet le plus proche du dispositif non touché, afficher sur l'écran du dispositif non touché l'au moins un objet identifié et afficher sur l'écran du dispositif touché les autres objets selon la revendication 2
∘ ou afficher les autres objets de l'interface utilisateur amovible sur le deuxième écran du dispositif non touché et l'au moins un objet identifié sur l'écran tactile du premier dispositif.

6. Dispositif selon la revendication 5, dans lequel, dans le cas où la distance entre le premier dispositif et le deuxième dispositif n'est plus inférieure à la valeur seuil, le module de traitement du dispositif touché est en outre configuré, lors de la détection de l'arrêt du contact entre l'objet de pointage et l'écran tactile du dispositif touché, pour maintenir l'affichage de la pluralité d'objets sur l'écran tactile du dispositif touché.
